(19) Europäisches Patentamt
European Patent Office
Office européen des brevets

(11) Veröffentlichungsnummer: **0 011 315**
**B1**

(12) # EUROPÄISCHE PATENTSCHRIFT

(45) Veröffentlichungstag der Patentschrift: **08.12.82**

(21) Anmeldenummer: **79200498.8**

(22) Anmeldetag: **07.09.79**

(51) Int. Cl.³: **C 01 B 33/26,** C 04 B 31/26, C 09 C 3/04, C 09 K 3/22, A 01 N 25/08

(54) **Verfahren zur Herstellung eines reversibel quellbaren, grossflächig kristallin ausgebildeten Dreischichtminerals mit voneinander gelösten Kristallschichten und mineralischer Stoff nach dem Verfahren.**

(30) Priorität: **13.11.78 DE 2849177**

(43) Veröffentlichungstag der Anmeldung: **28.05.80 Patentblatt 80/11**

(45) Bekanntmachung des Hinweises auf die Patenterteilung: **08.12.82 Patentblatt 82/49**

(84) Benannte Vertragsstaaten: **BE CH FR GB NL**

(56) Entgegenhaltungen:
**DE-A-1 803 800**
**DE-A-1 914 323**
**DE-A-1 960 858**
**DE-A-2 731 204**
**DE-A-2 741 857**
**GB-A-1 016 385**
**US-A-2 747 734**

(73) Patentinhaber: **Hans Kramer GmbH & Co. KG Dämmstoffwerk, Postfach 130505 Am Trippelsberg 71, D-4000 Düsseldorf 13 (DE)**

(72) Erfinder: **Dabrowski, Ralf, Chem.-Ing. (Grad), Hollunderweg 1, D-4610 Hilden (DE)**

(74) Vertreter: **Jahn-Held, Wilhelm W., Dr.Dr.-Ing. Dipl.Chem. et al, Schöne Aussicht 8, D-3513 Staufenberg 1 (DE)**

EP 0 011 315 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung eines reversibel quellbaren, großflächig kristallin ausgebildeten Dreischichtminerals mit voneinander gelösten Kristallschichten und mineralischer Stoff nach dem Verfahren

Vermiculit gehört zu den glimmerartigen Tonmineralen, die ein quellbares Kristallgitter besitzen und deren Kristalle lamellar aufgebaut sind. Es steht der Gruppe der Montmorin-Saponit-Minerale nahe. Das Mineral gehört zu den Dreischichtsilikaten und hat zwischen den sogenannten Schichtpaketen Wasser eingelagert. Wegen der nicht starr miteinander verbundenen Schichtpakete besitzt Vermiculit ein innerkristallines Quellvermögen. Damit hängt die Fähigkeit zusammen, daß sich Vermiculit-Kristalle beim raschen Erhitzen bis zum etwa 30fachen ihrer ursprünglichen Dicke in einer Richtung expandieren.

Die Definition des mineralischen Ausgangsstoffes Vermiculit ergibt sich aus Hugo Strunz, Mineralogische Tabellen, 5. Auflage, Leipzig 1970, Akademische Verlagsgesellschaft, Geest & Portig KG, Seite 447.

Nach Römpps Chemie-Lexikon, Frankh'sche Verlagshandlung, Stuttgart, 7. Auflage, 1977, Ziffer 3000, weist Vermiculit im Idealfall eine ungefähre Zusammensetzung folgender Formel auf:

$$Mg_3(Al,Si)_4O_{10}(OH)_2 \cdot (H_2O)_4.$$

Vermiculit enthält zusätzlich erhebliche Mengen an gebundenem Eisen (Fe).

Diese Eigenschaft der Expandierung zeigen auch »Hydroglimmer« sowie »Wechselschicht-(mixed layer-)Minerale«. Unter den zuletzt genannten Mineralen sind solche zu verstehen, in denen beispielsweise in wechselnder, ungeordneter Folge Vermiculit-Schichten kristallisieren.

Die Definition des mineralischen Ausgangsstoffes Hydroglimmer ergibt sich aus Salmang-Scholze in »Die physikalischen und chemischen Grundlagen der Keramik«, Springer-Verlag, New York, 1968.

Es ist Aufgabe dieser Erfindung, aus thermisch expandiertem Vermiculit oder thermisch expandiertem Hydroglimmer einen neuen Stoff mit einer Struktur herzustellen, die zu starken Adhäsions- und Kohäsionskräften sowie zu einem bestimmten Schwundverhalten beim Trocknen aus einer Dispersion oder der befeuchteten Trockenmasse führt.

Die Lösung dieser Aufgabe ergibt sich aus dem Verfahren der Erfindung zur Herstellung eines mineralischen Stoffes, der in der Hauptmenge aus tafelförmigen, extrem dünnen, gleichmäßig ebenen Teilchen besteht, mit einer Dicke der Teilchen von 0,5 bis 100 µm und mit einem Verhältnis Teilchendicke : äquivalentem Durchmesser gleich oder kleiner 1 : 10, die hydrophile Eigenschaften an den ebenen Teilchen aufweisen, die rasch polare Flüssigkeiten wie Wasser aufnehmen oder abgeben. Der mineralische Stoff gemäß der Erfindung entsteht erst durch einen Umwandlungsprozeß aus diesen Ausgangsmineralen.

Das Verfahren der Erfindung und der nach diesem hergestellte mineralische Stoff sowie dessen Verwendung ist in den Patentansprüchen definiert.

Die britische Patentschrift 1 016 385 beschreibt die Herstellung einer wäßrigen Suspension eines Dreischichtminerals durch Quellung von Vermiculit mit organischen Stoffen und anschließender, kolloider Zerkleinerung auf Teilchen von 0,001 µm Dicke und 100 µm Breite bzw. von 0,01 µm Dicke und 1000 µm Breite.

Die deutsche Auslegeschrift 1 914 323 beschreibt die Herstellung von delaminiertem Vermiculit durch trockene Zerkleinerung von expandiertem Vermiculit mit einer Hammermühle, ohne daß die Breitenabmessungen des Materials wesentlich herabgesetzt werden.

Der Stand der Technik macht also andere Dimensionen von Dreischichtmineralen und ein anderes Verhältnis Dicke : Durchmesser bekannt, der auch kein »äquivalenter Durchmesser« ist. Dieses Material weist nicht die Eigenschaften des Stoffes gemäß der Erfindung auf, insbesondere nicht die starken Adhäsions- und Kohäsions-Kräfte.

Der neue mineralische Stoff nach dem Verfahren der Erfindung stellt ein reversibel quellbares, großflächig kristallines Dreischichtmineral dar mit voneinander gelösten Kristallschichten.

Dieser neue Stoff nach dem Verfahren der Erfindung wird in pastöser oder trockener Form hergestellt. Dieser weist in beiden Formen neue Eigenschaften auf, welche diesen von dem Ausgangsmaterial unterscheiden. Zu diesen neuen Eigenschaften gehören insbesondere starke Adhäsions- und Kohäsions-Kräfte sowie eine weitgehende Plastizität im Bereich von 35 bis 65 Gewichtsprozent Trockenmasse, bezogen auf die Feuchtmasse.

Nach dem Verfahren der Erfindung erfolgt in der 4. Verfahrensstufe die Zerkleinerung des Mineral-Wasser-Gemisches unter turbulenten Strömungsbedingungen, um starke Schlag-, Prall-, Scher-Kräfte auf die Ebenen der plättchenförmigen Teilchen einwirken zu lassen.

In der 5. Verfahrensstufe erfolgt eine weitere Zerkleinerung dieses Gemisches durch Anwendung gerichteter Scherkräfte parallel zur Plättchenebene unter laminaren Strömungsbedingungen bei gleichzeitig bestimmten, hohen Relativgeschwindigkeiten des zu zerkleinernden Stoffes zu den Zerkleinerungskörpern. Durch diese Maßnahme werden Prall- und Scher-Kräfte, insbesonder solche, die aus verschiedenen Richtungen auf die Teilchen in mehreren Ebenen auftreffen, praktisch weitgehend ausgeschlossen.

Die Begriffe turbulente und laminare Strömungsbedingungen werden in der Technik durch die dimensionslose Zahl von Reynolds gekennzeichnet.

Der mathematische Ausdruck dieser Zahl lautet:

$$Re = \frac{w \cdot l \cdot \gamma}{\mu \cdot g},$$

worin

w die Geschwindigkeit des strömenden Mediums in m/s,

l eine Längenabmessung in m, wie z. B. der Durchmesser oder der äquivalente Durchmesser in Leitungssystemen,

$\gamma$ das spezifische Gewicht (Dichte) in $kg/m^3$,

$\mu$ die dynamische Viskosität in $kp \cdot s/m^2$,

g die Erdbeschleunigung 9,81 $m/s^2$

bedeuten.

Sofern ein bestimmter Wert der Reynoldsschen Zahl überschritten wird, geht der Zustand der laminaren Strömung unmittelbar in den turbulenten Zustand über. Für gradlinige Rohr- oder rohrähnliche Systeme beträgt dieser Wert $Re_{krit.} = 2320$.

Es liegen unterhalb dieses Wertes laminare Strömungen und oberhalb des Wertes turbulente Strömungen vor.

Zur Reynoldsschen Zahl wird auf folgende Literatur verwiesen:

Kassatkin, Chemische Verfahrenstechnik, 1962, Band 1, Seite 83. VEB-Deutscher Verlag für Grundstoffindustrie.

J. H. Perry, Chemical Engineers Handbook, 5—15. McGraw-Hill-Book Company, New York.

Nachstehend werden Beispiele für die Arbeitsweise in der 4. und 5. Verfahrensstufe beschrieben.

Dazu sind einige Begriffe zu erläutern: Der äquivalente Durchmesser für einen Schlitz oder Ringspalt von der Dicke s beträgt $d_{äq} = 2$ s (Kassatkin, l. c., Band 1, Seite 89).

Die dynamische Viskosität von Suspensionen errechnet sich wie folgt:

$\mu_s = \mu_F \cdot (1 + 4{,}5 \cdot \varphi)$ (Kassatkin, l. c., Band 1, Seite 50).

Darin bedeutet

$\mu_s$ die dynamische Viskosität der Suspension in $kp \cdot s/m^2$,

$\mu_F$ die dynamische Viskosität der reinen Flüssigkeit in $kp \cdot s/m^2$,

$\varphi$ der Volumenanteil des Feststoffes in der Suspension, ausgedrückt als Dezimalbruch.

Für die Umrechnung von Poise auf die technische Maßeinheit gilt:

$1\ cP = 1{,}02 \cdot 10^{-4}\ kp \cdot s/m^2$.

Die dynamische Viskosität von Wasser bei 20°C beträgt = 1 cP.

Arbeitsweise in der 4. Verfahrensstufe:

1) Mahlspalt 0,5 mm.
Feststoff-Konzentration = 10 Gewichtsprozent ≙ $\varphi = 0{,}0526$.
$\mu_s = 1{,}02 \cdot 10^{-4}(1 + 4{,}5 \cdot 0{,}0526) = 1{,}26 \cdot 10^{-4}\ kp \cdot s/m^2$.
$d_{äq} = 2 \cdot 5 \cdot 10^{-4} = 10^{-3}$ m.
w = 19 m/s · $\gamma$ Flüssigkeit $H_2O$ = 1000 $kp/m^3$.

$$Re = \frac{19{,}10^{-3} \cdot 10^3}{1{,}26 \cdot 10^{-4} \cdot 9{,}81} = 15\,371\ .$$

Es liegt somit der turbulente Strömungszustand vor.

2) Mahlspalt 1,0 mm.
Feststoff-Konzentration = 8 Gewichtsprozent ≙ $\varphi = 0{,}0417$.
$\mu_s = 1{,}02 \cdot 10^{-4}(1 + 4{,}5 \cdot 0{,}0417) = 1{,}21 \cdot 10^{-4}\ kp \cdot s/m^2$.
$d_{äq} = 2 \cdot 10^{-3}$ m.
w = 18 m/s.

$$Re = \frac{18 \cdot 2 \cdot 10^{-3} \cdot 10^3}{1{,}21 \cdot 10^{-4} \cdot 9{,}81} = 30\,328\ .$$

Es liegt somit der turbulente Strömungszustand vor.

Arbeitsweise in der 5. Verfahrensstufe:

1) Mahlspalt s = 0,01 mm.
Feststoff-Konzentration = 10 Gewichtsprozent ≙ $\varphi = 0{,}0526$.
$\mu_s = 1{,}26 \cdot 10^{-4}$ kp · s/m².
däg = $2 \cdot 10^{-5}$ m.
w = 44,5 m/s.

$$\mathrm{Re} = \frac{44{,}5 \cdot 2 \cdot 10^{-5} \cdot 10^{3}}{1{,}26 \cdot 10^{-4} \cdot 9{,}81} = 720\,.$$

Es liegt somit der laminare Strömungszustand vor.
2)Mahlspalt s = 0,025 mm.
Feststoff-Konzentration 12,5 Gewichtsprozent ≙ $\varphi = 0{,}0667$.
$\mu_s = 1{,}02 \cdot 10^{-4}(1 + 4{,}5 \cdot 0{,}0667)$.
däg = $1{,}33 \cdot 10^{-4}$ kp · s/m².
w = 32,5 m/s.

$$\mathrm{Re} = \frac{32{,}5 \cdot 5 \cdot 10^{-5} \cdot 10^{3}}{1{,}33 \cdot 10^{-4} \cdot 9{,}81} = 1245\,.$$

Es liegt somit der laminare Strömungszustand vor.

Der mineralische Stoff nach dem Verfahren der Erfindung zeigt eindeutige Unterschiede in verschiedenen Parametern seiner Eigenschaften gegenüber dem Ausgangsstoff. Diese neuen Eigenschaften des mineralischen Stoffes nach der Erfindung bieten die Möglichkeit, diesen zahlreichen technischen Anwendungsgebieten zuzuführen. Solche sind in den Patentansprüchen definiert.

Einige Parameter sind in den folgenden Messungen dargestellt:

## 1. Messungen der Plastizität

1.1: Zur Methodik wird auf folgende Literatur verwiesen:,
  1.11 DKG-Richtlinien, X/1969; Definition, Anlage 2
    Bestimmung nach Pfefferkorn.
  1.12 Die »Keramik«, Salmang/Scholze, Anlage 3
    Seiten 226, 227: Grundlagen der Rheologie (5.2.1)
    Seiten 236, 237: Methoden von Pfefferkorn, von Bowmaker.

1.2: Bild 1
Plastizitätsmessungen, Kurven nach Pfefferkorn und nach Bowmaker.
Die Kurven beziehen sich auf:
(1) den Stoff gemäß der Erfindung in wäßriger Dispersion,
(2) fein vermahlenen Vermiculit als Basisstoff, in einer Korngrößenverteilung entsprechend Stoff (1) in wäßriger Dispersion,
(3) mageren Ton,
(4) fetten Ton.

Zur Auswertung der Ergebnisse dieser Messungen werden die Kurven nach Bowmaker verglichen.

Ein breiter Bereich praktisch gleichbleibender Plastizität liegt vor, wenn die Bowmaker-Kurve flach verläuft. Der Bereich wird um so enger je steiler die Kurve abfällt.

Somit ist die Steilheit der Kurve ein Maß für die Plastizität, wobei unter Steilheit das Verhältnis der Differenz der Bowmaker-Werte zu der Differenz der Wassergehalte × 1000 zu verstehen ist.

Tone (3, 4) ergeben einen geringen Plastizitätsbereich. Vermiculit (2) zeigt in wäßriger Dispersion nur bei sehr hohem Wasserbedarf einen gewissen Plastizitätsbereich. Dieser große Wasseranteil führt zum »Ausbluten« aus der plastischen Masse.

Der Stoff gemäß der Erfindung (1) zeigt einen sehr weiten Plastizitätsbereich. Der Wassergehalt ist wesentlich geringer und das System gegen Ausbluten und Sedimentation stabil.

Für den Stoff gemäß der Erfindung (1) läuft die Bowmaker-Kurve mit steigendem Wassergehalt asymptotisch aus.

Für den Stoff gemäß der Erfindung (1) ändert sich im Konzentrationsbereich von 110 bis 140 g

$H_2O$/100 g Trockensubstanz der Bowmaker-Wert nur von 8 auf 6, entsprechend einer Steilheit von 6,7.
Der Wert für den Basisstoff Vermiculit (2) weist im gleichen Konzentrationsbereich eine Änderung des Bowmaker-Wertes von 21,5 auf 9 auf, entsprechend einer Steilheit von 417.

Die Parameter der Plastizität sind also sehr unterschiedlich für den Ausgangsstoff und für den daraus erzeugten neuen Stoff gemäß der Erfindung (1). Dieser Unterschied ist noch größer gegenüber den bei diesen Messungen berücksichtigten typischen Tonen.

## 2. Messungen der rheologischen Eigenschaften

Kurven der rheologischen Eigenschaften in wäßriger Dispersion bei 20°C. Bild 2. Meßmethode: Rotationsviskosimeter »Rheomat-15«/Contraves.

Es werden die Kurven für den Stoff gemäß der Erfindung mit dem Basisstoff Vermiculit verglichen.

Der Stoff gemäß der Erfindung zeigt auch bei niedriger Feststoff-Konzentration ein hohes quasi-plastisches Vermögen (siehe Salmang-Scholze Seite 227).

Dies ist der Grund dafür, daß der Stoff gemäß der Erfindung auch noch bei niedriger Feststoff-Konzentration — im Gegensatz zum Basisstoff Vermiculit — nur langsam sedimentiert.

Der Stoff gemäß der Erfindung zeigt als wäßrige Dispersion mit einem Feststoffgehalt von 20% einen sehr steilen Verlauf der Schubspannung über der Schergeschwindigkeit D. Es ergibt sich bereits bei $D = 0\ s^{-1}$ eine Schubspannung von $\tau = 300$ dyn/cm$^2$.

Bei $D = 115\ s^{-1}$ erreicht die Schubspannung den Wert $\tau = 1000$ dyn/cm$^2$.

Der erhebliche Wert von $\tau = 300$ dyn/cm$^2$ bei der Schubspannung $D = 0$ läßt die quasi-plastischen Eigenschaften des Stoffes gemäß der Erfindung klar erkennen.

Der Basisstoff Vermiculit weist in wäßriger Dispersion diese Eigenschaften nicht auf. Bei dem gleichen Feststoffgehalt von 20% verläuft die Funktion $\tau$ über D wesentlich flacher. Bei $D = 0$ ist ebenfalls $\tau = 0$. Es wird dadurch klar, daß kein quasi-plastisches Verhalten vorliegt.

Der Ausgangsstoff zeigt kein quasi-plastisches Verhalten. Bei $D = 700\ s^{-1}$ ist erst eine Schubspannung von $D = 100$ dyn/cm$^2$ vorhanden.

Die überraschenden rheologischen Eigenschaften des neuen Stoffes gemäß der Erfindung sind der Grund dafür, daß sich dieser in pastöser wie in fließender Form zu dünnen, gleichmäßigen Filmen ausstreichen oder ausspritzen läßt. Diese Möglichkeiten sind für einen anorganischen Stoff sehr überraschend und nicht naheliegend.

## 3. Messungen der Abriebfestigkeit und Haftfestigkeit

### 3.1 Methodik der Messungen

Der zu untersuchende Stoff wird aus wäßriger Suspension auf eine glatte Unterlage, wie blanker Stahl oder Fensterglas, aufgetragen und danach bei 110°C getrocknet.

Die Schichtdicke beträgt im getrockneten Zustand 100 µm +/−10%.

Auf diese Schicht wird ein zylinderförmiges Weichgummistück mit der Grundfläche von 154 mm$^2$, entsprechend dem Durchmesser von 14 mm, aufgesetzt. Das Gummistück ist an einem Metallstab befestigt. Dieser wird so geführt, daß eine leichte Beweglichkeit in senkrechter Richtung besteht.

Die auf die zu prüfende Schicht des Stoffes wirkende Gesamtlast beträgt 200 p entsprechend einem Druck von 130 p/cm$^2$.

Die Platte mit der Schicht wird quer zu dieser Last jeweils um 50 mm in 1 Sekunde hin und her verschoben. Nach jedem Schub wird eine mögliche Veränderung der Oberfläche festgestellt.

Meßbedingungen:

| | |
|---|---|
| Auflagedruck: | 130 p/cm$^2$ |
| Auflagefläche: | Weichgummi mit 154 mm$^2$ |
| Reibgeschwindigkeit: | 50 mm/s |
| Schichtdicke: | 100 µm +/− 10% |
| Unterlage: | blankes Stahlblech |

3.2 Tabelle 1:

Ergebnisse

| Untersuchte Substanz | Anzahl der Reib-bewegungen | Meßergebnis |
|---|---|---|
| Stoff gemäß der Erfindung | 100 | keine Abfärbung, kein Abrieb, gute Haftung |
| Vermiculit | 1<br>16 | Abfärbung,<br>Schicht völlig abgerieben, mangelnde Haftung |
| Talkum | 1 | Abfärbung, Schicht völlig abgerieben, mangelnde Haftung |
| Ton, fett | 1<br>29 | Abfärbung,<br>Schicht völlig abgerieben, schlechte Haftung |
| Ton, mager | 0 | bereits beim Auftrocknen hebt der Film von der Unterlage ab, keine Haftung |

*) Nach 100 Reibbewegungen wurde der vergleichende Test abgebrochen. Es wurde bis zu dieser Beanspruchung keine Veränderung an der Oberfläche und keine Gewichtsabnahme der Schicht festgestellt.

Der Stoff gemäß der Erfindung zeigt nach 100 Reibbewegungen keine Abfärbung und keine sicht- oder wägbaren Abrieberscheinungen.

Dagegen zeigt Vermiculit als Basisstoff bei gleicher Korngrößen-Zusammensetzung bereits nach einer einzigen Reibbewegung starke Abfärbung sowie eine Veränderung der Oberfläche. Nach 16 Reibbewegungen ist die aufgetragene Schicht bereits völlig abgetragen.

Der Stoff gemäß der Erfindung unterscheidet sich also in der Abriebfestigkeit von dem Ausgangsstoff zu seiner Herstellung und von anderen Vergleichsstoffen der Technik mit unerwartet fehlender Abfärbung, sowie mit praktisch vorhandener Abriebfestigkeit und guter Haftung auf dem Untergrund.

3.3 Tabelle 2:

Ergebnisse

Meßbedingungen: wie bei Tabelle 1
Unterlage: Fensterglas

| Untersuchte Substanz | Anzahl der Reibbewegungen | Meßergebnis |
|---|---|---|
| Stoff gemäß der Erfindung | 100 | keine Abfärbung, kein Abrieb, gute Haftung |
| Vermiculit | 1<br>19 | Abfärbung,<br>Schicht völlig abgerieben, mangelnde Haftung |

*) Nach 100 Reibbewegungen wurde der vergleichende Test abgebrochen. Es wurde bis zu dieser Beanspruchung keine Veränderung an der Oberfläche und keine Gewichtsabnahme der Schicht festgestellt.

Der Stoff gemäß der Erfindung zeigt nach 100 Reibbewegungen die gleiche, unbeeinträchtigte Haftung auf den beiden gewählten Unterlagen und zwar auf blankem Stahl und auf klarem Glas. Dagegen zweigt der Ausgangsstoff zur Herstellung des neuen Stoffes gemäß der Erfindung bei gleicher Zusammensetzung der Korngrößen bereits nach 19 Reibbewegungen auf Glas und bei 16 Reibbewegungen auf Stahl eine mangelnde Haftung durch Wegschieben von der Unterlage.

Der Unterschied der Abriebfestigkeit ist erheblich. Der neue Stoff gemäß der Erfindung zeigt praktisch keinen Abrieb. Dagegen ist die Schicht aus Vermiculit nach diesen Reibbewegungen völlig abgerieben. Es ist überraschend, daß der neue Stoff gemäß der Erfindung in diesem Parameter völlig unterschiedliche Eigenschaften im Vergleich mit dem Ausgangsstoff Vermiculit aufweist.

Ergänzende Messungen zur Haftfestigkeit und Abriebfestigkeit.

3.4 Methodik der Messungen

Zur Durchführung dieser Messungen wird die gleiche Methodik (siehe 3.1) wie für die Messung der Abriebfestigkeit angewendet.

Diese Methode wird jedoch dadurch erweitert, daß der Auflagedruck sukzessiv so weit erhöht wird, bis bei nur einer Reibbewegung die aufgetragene Schicht weggeschoben wird.

Meßbedingungen:
wie bei Tabelle 1 jedoch mit unterschiedlichem Auflagedruck

3.5 Tabelle 3:

Ergebnisse

| Auflagedruck | Anzahl der Reibbewegungen, bis der Stoff auf der Unterlage zerstört wird | |
|---|---|---|
| p/cm$^2$ | Stoff gemäß der Erfindung | Vermiculit |
| 130 | 100 | 16 |
| 150 | 100 | 4 |
| 200 | 100 | 1 |
| 500 | 100 | 1 |
| 1000 | 100 | 1 |

1 p/cm$^2$ = 9,81 · 10$^{-5}$ N/mm$^2$.

Der Stoff gemäß der Erfindung zeigt nach 100 Reibbewegungen keine Beeinträchtigung seiner Haftung auf der Unterlage. Dieses Ergebnis ist das gleiche auf blankem Stahl wie auf Glas.

Bei einer weiteren Meßreihe mit sukzessiv erhöhtem Auflagedruck wurde selbst bei einem Auflagedruck von 1000 p/cm$^2$ und 100 Reibbewegungen mit dem Stoff gemäß der Erfindung keine Beeinträchtigung der Haftung auf diesen Unterlagen festgestellt. Dagegen zeigt der Ausgangsstoff zur Herstellung des Stoffes gemäß der Erfindung, Vermiculit, bei praktisch gleicher Zusammensetzung der Korngrößen bereits nach 16 Reibbewegungen auf Stahl bei einem Auflagedruck von jeweils 130 p/cm$^2$ und nach 19 Reibbewegungen auf Glas als Unterlagenmaterial das Wegschieben von den Unterlagen, also keine ausreichende Haftung.

Vermiculit als Basisstoff zeigt bereits bei der 4. Reibbewegung mit einem Auflagedruck von 150 p/cm$^2$ und bei der ersten Reibbewegung mit 200 p/cm$^2$ das vollständige Wegschieben von der Unterlage.

Der Unterschied der Haftfestigkeit ist erheblich. Der neue Stoff gemäß der Erfindung zeigt eine feste Haftung auf dem gewählten Untergrund. Dies gilt ebenso für einen um eine Zehnerpotenz gesteigerten Auflagedruck.

Dagegen zeigt der Ausgangsstoff zur Herstellung des neuen Stoffes gemäß der Erfindung bereits nach wenigen Reibbewegungen mit geringem Auflagedruck keine Haftfestigkeit auf dem gleichen Untergrund.

Es ist überraschend, daß der neue Stoff gemäß der Erfindung in diesem Parameter völlig unterschiedliche Eigenschaften im Vergleich mit dem Ausgangsstoff Vermiculit aufweist.

Der neue Stoff gemäß der Erfindung unterscheidet sich, wie diese vergleichenden Messungen bestätigen,in den wesentlichen Parametern der plastischen Eigenschaften, den rheologischen Eigenschaften, in der Abriebfestigkeit und in der Haftfestigkeit nach bekannten Methoden oder nach einer definierten Methode von seinem Ausgangsstoff Vermiculit. Dies gilt in gleicher Weise für Hydroglimmer als Ausgangsstoff.

Diese Feststellung beruht auf der Tatsache, daß der neue Stoff gemäß der Erfindung andere physikalische und chemische Parameter als der Ausgangsstoff besitzt, aus dem dieser neue Stoff gemäß dem offenbarten Verfahren oder nach anderen Verfahren erzeugt werden kann.

Ein technischer Vorteil ergibt sich beispielsweise für die Verwendung als Bindemittel zusammen mit anderen Wirkstoffen, die in einer solchen Mischung starke Haftfähigkeit besitzen bei großer spezifischer Oberfläche von etwa 12 m$^2$/g.

Der mineralische Stoff gemäß der Erfindung ist somit bevorzugt als Trägerstoff für verschiedene, in der Technik bekannte Anwendungsgebiete geeignet. Dazu gehört auch das Aufbringen von Pflanzenschutzmitteln. Ein anderes Anwendungsgebiet liegt in der Verwendung als Feuerfestmasse. Der Sinterpunkt des mineralischen Stoffes gemäß der Erfindung liegt bei etwa 1260°C und der Schmelzpunkt bei etwa 1350°C.

Wichtige Anwendungsgebiete liegen auch in der Verwendung von Körpern und Filmen aus diesem nicht brennbaren mineralischen Stoff gemäß der Erfindung. Dieser kann vorteilhaft auch in expandierter Form angewendet werden. Es überrascht, daß der mineralische Stoff der Erfindung, für

den in der Praxis eine große Anwendungsbreite besteht, bisher nicht vorgeschlagen wurde.

Ein weiteres Anwendungsgebiet liegt in der Verwendung des mineralischen Stoffes gemäß der Erfindung als Trennmittel.

Für die in den Patentansprüchen und in der Beschreibung verwendeten Maßzahlen bestehen folgende Beziehungen:

| | | Verwendete Einheit | | SI-Einheit |
|---|---|---|---|---|
| Dynamische Viskosität | $\mu$ | 1 kp · s/m$^2$ | ≙ | 9,81 N · s/m$^2$ |
| Schubspannung | c | 1 dyn/cm$^2$ | ≙ | 1 · 10$^{-7}$ N/mm$^2$ |
| Druck | | 1 p/cm$^2$ | ≙ | 9,81 · 10$^{-3}$ N/cm$^2$ |

Die Werte der dimensionslosen Kenngröße Reynolds-Zahl ändert sich durch Einführung der SI-Einheiten nicht, da die Relationen die gleichen bleiben.

Im Diagramm (Bild 2) bleiben nach Einführen der SI-Einheit die geometrischen Verhältnisse beider Kurven zueinander erhalten.

**Patentansprüche**

1. Verfahren zur Herstellung eines mineralischen Stoffes auf Basis eines reversibel quellbaren, großflächig kristallin ausgebildeten Dreischichtminerals mit voneinander gelösten Kristallschichten, dadurch gekennzeichnet, daß in einer 1. Stufe thermisch expandierter Vermiculit oder thermisch expandierter Hydroglimmer, diese Minerale auch mit innerkristallin eingelagertem, nicht quellbarem Mineral, eines Kornbereiches von 0,5 bis 4 mm, in einen großen Überschuß von Wasser eingerührt wird, danach im fließenden Strom bei einer Verweildauer von 10 bis 60 s eine Schwimmtrennung des expandierten, aufschwimmenden Vermiculits oder Hydroglimmers von nicht expandierten Anteilen erfolgt, danach in einer 2. Stufe der abgetrennte expandierte Vermiculit oder Hydroglimmer mit einem Wassergehalt von etwa 90%, bezogen auf das Feuchtgewicht, durch Lagerung unter Bewegung von der zwischen den Lamellen befindlichen Restluft befreit wird und gleichzeitig die wäßrige Quellung des Minerals auf seinen Endzustand erfolgt, danach in einer 3. Stufe in dem Mineral-Wasser-Gemisch durch intensive Bewegung des Gemisches eine Vorzerkleinerung erfolgt und gleichzeitig der Zustand hoher Strukturviskosität (Thixotropie) aufgehoben wird, und in einer 4. Stufe das Gemisch unter turbulenten Strömungsbedingungen auf eine Körnung mit einem Teilchendurchmesser von 0,1 bis 0,3 mm, bei einer Dicke der plättchenförmigen Teilchen bis 200 µm, aufgemahlen wird, danach in einer 5. Stufe unter laminaren Strömungsbedingungen bei Relativgeschwindigkeiten des zu zerkleinernden Stoffes zum Zerkleinerungskörper von 10 bis 120 m/s eine Vermahlung auf über 50 Gewichtsprozent tafelförmiger, extrem dünner, gleichmäßig ebener Teilchen mit einer Dicke von 0,5 bis 10 µm und mit Flächenabmessungen entsprechend einem äquivalenten Durchmesser von 10 bis 200 µm und einem Verhältnis Teilchendicke : äquivalentem Durchmesser gleich oder kleiner 1 : 10 erfolgt, danach in einer 6. Stufe durch Wasserentzug der Feststoffgehalt des Gemisches auf etwa 40% gebracht und das poröse Produkt ausgeführt oder gegebenenfalls getrocknet wird.

2. Verfahren nach Anspruch 1, dadurch gekennzeichnet, daß das pastöse Produkt in einem Temperaturbereich von 50 bis 150° C bei einer relativen Luftfeuchtigkeit von 5 bis 90% getrocknet wird und zwar derart, daß unterhalb einer Restfeuchtigkeit des zu trocknenden Stoffes von 15 Gewichtsprozent die Wärmezufuhr und die Temperatur des Wärmeübergangsmediums reduziert wird, so daß eine partielle Überhitzung des Stoffes von mehr als 1 h Dauer bei 130° C bzw. von mehr als 0,5 h Dauer bei 150° C vermieden wird.

3. Mineralischer Stoff auf Basis eines reversibel quellbaren, großflächig kristallin ausgebildeten Dreischichtminerals mit voneinander gelösten Kristallschichten, hergestellt mit dem Verfahren nach den Ansprüchen 1 und 2, dadurch gekennzeichnet, daß dieser aus über 50 Gewichtsprozent extrem dünner, gleichmäßig ebener, tafelförmiger Teilchen mit einer Dicke von 0,5 bis 10 µm und mit Flächenabmessungen entsprechend einem äquivalenten Durchmesser von 10 bis 200 µm und mit einem Verhältnis Teilchendicke : äquivalentem Durchmesser gleich oder kleiner 1 : 10 besteht, dessen Teilchen hydrophile Eigenschaften an den ebenen Flächen aufweisen, die rasch polare Flüssigkeiten wie Wasser aufnehmen oder abgeben, sowie mit starken Adhäsions- und Kohäsions-Kräften, die beim Trocknen der Teilchen aus einer Dispersion in einer polaren Flüssigkeit, wie Wasser, oder durch Befeuchtung der Trockenmasse zu einem Schwundverhalten von im wesentlichen nur in einer Richtung und zwar senkrecht zur Tafelebene führen, wobei die Teilchen flachgeschichtet weitgehend

nebeneinanderliegen, und mit weitgehender Plastizität im Bereich von 35 bis 65 Gewichtsprozent Trockenmasse.

4. Mineralischer Stoff auf Basis eines reversibel quellbaren, großflächig kristallin ausgebildeten Dreischichtminerals mit voneinander gelösten Kristallschichten, hergestellt mit dem Verfahren nach den Ansprüchen 1 und 2, dadurch gekennzeichnet, daß dieser eine Plastizitätszahl

$$h_1 = 65{,}4393 - 1{,}32126\,W + 1{,}03456 \cdot 10^{-2} W^2 - 2{,}80579 \cdot 10^{-5} W^3$$

in den Grenzen 60 bis 140 W aufweist, wobei in der Bowmakerskala $h_1$=mm und W=g $H_2O$/100 g Trockensubstanz bedeutet.

5. Mineralischer Stoff auf Basis eines reversibel quellbaren, großflächig kristallin ausgebildeten Dreischichtminerals mit voneinander gelösten Kristallschichten, hergestellt mit dem Verfahren nach den Ansprüchen 1 und 2, dadurch gekennzeichnet, daß dieser eine Schubspannung

$$\tau\,(dyn/cm^2) = 277{,}861 + 16{,}7424\,D - 1{,}39397 \cdot 10^{-1} D^2 + 4{,}15845\,D^3$$

als Ausdruck seiner rheologischen Eigenschaften in wäßriger Dispersion bei einer Konzentration von 20 Gewichtsprozent bei 20° C, gemessen in einem Rotationsviskosimeter, in den Grenzen Null bis 140 D aufweist, wobei D die Schergeschwindigkeit in $s^{-1}$ bedeutet (1 dyn/$cm^2$ = 1 · $10^{-7}$ N/$mm^2$).

6. Mineralischer Stoff nach den Ansprüchen 3 bis 5, dadurch gekennzeichnet, daß dieser bei der Auftrocknung auf Flächen aus einer Dispersion in einer polaren Flüssigkeit, wie Wasser, für sich oder in Mischung mit anderen Stoffen, wie auf glatten Flächen, keine Schwundrisse zeigt.

7. Mineralischer Stoff nach den Ansprüchen 3 bis 6, dadurch gekennzeichnet, daß dieser bei der Trocknung aus einer Dispersion in einer polaren Flüssigkeit, wie Wasser, einen Körper oder Film oder beim Auftrocknen auf Flächen eine Masse mit dichter Teilchenpackung und geringem Porenvolumen bildet.

8. Mineralischer Stoff nach den Ansprüchen 3 bis 7, dadurch gekennzeichnet, daß die tafelförmigen Teilchen über 75% der Gesamtoberfläche ausmachen.

9. Mineralischer Stoff nach den Ansprüchen 3 bis 8, dadurch gekennzeichnet, daß dieser in der Hauptmenge aus flachen, gleichmäßig ebenen, tafelförmigen Teilchen einer Dicke von 0,5 bis 5 µm besteht.

10. Mineralischer Stoff nach den Ansprüchen 3 bis 9, dadurch gekennzeichnet, daß dieser in der Hauptmenge aus tafelförmigen Teilchen mit einem Verhältnis Teilchendicke : äquivalentem Durchmesser von gleich oder kleiner 1 : 20 besteht.

11. Mineralischer Stoff nach den Ansprüchen 3 bis 10, dadurch gekennzeichnet, daß dieser bei der Trocknung aus einer Dispersion in einer polaren Flüssigkeit, wie Wasser, oder beim Auftrocknen auf Flächen einen Schwund der tafelförmigen Teilchen in den Flächenabmessungen von 0,5 bis 1,5% (Länge und Breite) und in der Dicke von 25 bis 35% aufweist.

12. Verwendung des mineralischen Stoffes nach den Ansprüchen 3 bis 11 als Trennmittel für andere Stoffe, oder als Antibackmittel für hygroskopische Stoffe, oder als Antistaubmittel für Stoffe mit Feinkornanteil oder mit hohem Abrieb, oder als Trägerstoff für hochwirksame Stoffe, oder für Pflanzenschutzmittel, oder für Mittel zur Bekämpfung tierischer Schädlinge, oder als Gleitmittel zur Verbesserung der Gleitfähigkeit anderer Stoffe, oder als Umhüllungsmittel für wasserlösliche Stoffe zur Verzögerung der Lösungsgeschwindigkeit, oder zur Verzögerung der Lösungsgeschwindigkeit wasserlöslicher Düngemittel.

**Claims**

1. Method for the manufacture of a mineral substance based on a reversibly expandible, three-flake mineral of crystalline form of large surface area, with separated crystal flakes, characterised in that in the 1st stage thermally expanded vermiculite or thermally expanded hydro-mica, these minerals also having intercrystalline embedded non-expandible mineral, of a grain size range of approximately 0.5 to 4 mm, is stirred in a large excess of water, then in a flowing current for a residence time of approximately 10 to 60 sec a flotation separation of the expanded, floating vermiculite or hydro-mica from non-expanded components takes place, then in the 2nd stage the separated, ecpanded vermiculite or hydro-mica, with a water content of approximately 90% based on the moist weight, is freed of the residual air held between the lamellae by storage under movement and at the same time the aqueous expansion of the mineral to its final state takes place, then in the 3rd stage a preliminary crushing is brought about by intensive movement of the mixture and at the same time its state of high intrinsic viscosity is destroyed (by thixotropy), in the 4th stage the mixture is ground under turbulent flow conditions to a grain size with a particle diameter of 0.1 to 0.3 mm, the thickness of the platelet-shaped particles being up to 200 micron, then in the 5th stage under laminar flow conditions at speeds of the material to be crushed relative to the crushing body of 10 to 120 m/sec grinding takes place to give over 50 percent by weight of tabular, extremely thin, uniformly even particles with a

thickness of 0.5 to 10 micron and with surface dimensions corresponding to an equivalent diameter of 10 to 200 micron and a ratio of particle thickness : equivalent diameter equal to or less than 1 : 10, and then in the 6th stage by hydro-extraction the solid matter content of the mixture is brought to approximately 40%, and the porous product is collected, or if required is dried.

2. Method according to Claim 1, characterised in that the pasty product is dried at a temperature in the range of 50 to 150°C at a relative atmospheric humidity of 5 to 90% and in such a way that below a residual humidity of the material being dried of 15 percent by weight the heat supply and the temperature of the heat transmission medium are reduced, so that any partial overheating of the material, of more than 1 h duration at 130°C or of more than 0.5 h duration at 150°C, is avoided.

3. Mineral substance based on a reversibly expandible, three-flake mineral of crystalline form of large surface area, with separated crystal flakes, manufactured by the method according to Claims 1 and 2, characterised in that it consists of over 50 percent by weight of extremely thin, uniformly even, tabular particles with a thickness of 0.5 to 10 micron and with surface dimensions corresponding to an equivalent diameter of 10 to 200 micron and a ratio of particle thickness : equivalent diameter equal to or less than 1 : 10, the particles having hydrophilic properties on the even surfaces, which quickly absorb or give off polar fluids such as water, and which display strong adhesive and cohesive forces, which on drying of the particles after dispersion in a polar fluid such as water or damping of the dry mass undergo a shrinkage behaviour substantially only in one direction, namely perpendicularly to the plate plane, whereby the particles lie flatly layered substantially next to one another, and with substantial plasticity in the range of 35 to 65 percent by weight dry mass.

4. Mineral substance based on a reversibly expandible three-flake mineral in crystalline form of large surface area, with separated crystal flakes, manufactured by the method according to Claims 1 and 2, characterised in that it has a plasticity factor

$$h_1 = 65.4393 - 1.32126\,W + 1.03456 \cdot 10^{-2} W^2 - 2.80579 \cdot 10^{-5} W^3$$

in the range 60 to 140 W, wherein on the Bowmaker Scale $h_1$ = mm and W = g $H_2O$/100 g dry substance.

5. Mineral substance based on a reversibly expandible three-flake mineral of crystalline form of large surface area, with separated crystal flakes, manufactured according to the method of Claim 1 and 2, characterised in that it has a shearing stress

$$\tau\,(dyn/cm^2) = 277.861 + 16.7424\,D - 1.39397 \cdot 10^{-1} D^2 + 4.15845\,D^3$$

as the expression of its rheological properties in aqueous dispersion at a concentration of 20 percent by weight at 20°C, measured in a rotary viscometer, in the range zero to 140 D, wherein D represents the shear speed in $sec^{-1}$.

6. Mineral substance according to Claims 3 to 5, characterised in that after drying on surfaces from a dispersion in a polar fluid such as water alone or in mixture with other substances, such as on smooth surfaces, it does not show any shrinkage cracks.

7. Mineral substance according to Claim 3 to 6, characterised in that on drying from a dispersion in a polar fluid such as water, a body or film is formed, or on drying on surfaces a mass with tight particle packing and a small pore volume is formed.

8. Mineral substance according to Claims 3 to 7, characterised in that the tabular particles constitute over 75% of the total surface area.

9. Mineral substance according to Claims 3 to 8, characterised in that it consists in the bulk of flat, uniformly even, tabular particles of a thickness of 0.5 to 5 micron.

10. Mineral substance according to Claims 3 to 9, characterised in that it consists in the bulk of tabular particles with a ratio of particle thickness : equivalent diameter of equal to or less than 1 : 20.

11. Mineral substance according to Claims 3 to 10, characterised in that on drying from a dispersion in a polar fluid such as water or on drying on surfaces it shows a shrinkage of the tabular particles in the surface dimensions of 0.5 to 1.5% (length and width) and in the thickness of approximately 25 to 35%.

12. Use of the mineral substance according to Claims 3 to 11 as a separating agent for other substances, or as anti-caking agent for hygroscopic substances, or as anti-dust agent for substances with a fine grain component or with high abrasion, or as carrier substance for high potency substances or crop protection agents or agents to combat animal pests, or as a lubricant to improve the ability of other substances to slide, or as an enveloping agent for water-soluble substances to slow the rate of dissolution, or to slow the rate of sissolution of water-soluble fertiliser.

## Revendications

1. Procédé de préparation d'une substance minérale, à base d'un produit minéral à trois couches, cristallin à grande surface, pouvant gonfler de manière reversible, et ayant des couches cristallines séparées les unes des autres, caractérisé en ce qu'il consiste en le premier stade, à agiter dans un

grand excès d'eau de la vermiculite expansée par voie thermique, ou de l'hydromica expansé par voie thermique, ce produit minéral ainsi qu'un produit minéral intracristallin intersticiel, ne pouvant pas gonfler, ayant une granulométrie comprise entre 0,5 et 4 mm environ, puis à effectuer une séparation par flottation de la vermiculite ou de l'hydromica surnageant expansé des constituants qui ne sont pas expansés, en opérant dans un courant en mouvement avec une durée de séjour de 10 à 60 secondes environ, puis dans le deuxième stade, à rendre exempt de l'air résiduel se trouvant entre les lamelles, la vermiculite ou l'hydromica expansé, séparé, et ayant une teneur en eau de 90% environ rapportée au poids humide, en laissant sous agitation, et à effectuer en même temps le gonflement à son état final du produit minéral par l'eau, puis dans le troisième stade, à effectuer dans le mélange produit minéral-eau, en lui donnant un mouvement intensif, une préfragmentation et, en même temps, à supprimer l'état de viscosité structurelle élevée (thixotropie), puis dans le quatrième stade, à broyer le mélange dans des conditions d'écoulement turbulent, jusqu'à obtention d'une granulométrie d'un diamètre de particules de 0,1 à 0,3 mm pour une épaisseur des particules en forme de plaquettes allant jusqu'à 200 microns, puis dans le cinquième stade, à effectuer dans des conditions d'écoulement laminaire pour une vitesse relative de la matière à fragmenter aux corps de fragmentation de 10 à 120 mètres/seconde, un broyage jusqu'à obtention de plus de 50% en poids de particules tabulaires extrêmement minces d'une planéité uniforme, ayant une épaisseur de 0,5 à 10 microns, et des dimensions de surface correspondant à un diamètre équivalent de 10 à 200 microns, et un rapport épaisseur de particules : diamètre équivalent égal ou inférieur à 1 : 10, puis dans le sixième stade, à amener par élimination de l'eau la teneur en matières solides du mélange à 40% environ, et à rendre le produit poreux ou, éventuellement, à le sécher.

2. Procédé suivant la revendication 1, caractérisé en ce qu'il consiste à sécher le produit pâteux dans une gamme de températures allant de 50 à 150° C, à une humidité relative de l'air de 5 à 90% et cela de manière à ce qu'en-dessous d'une humidité résiduelle de la substance séchée de 15% en poids, l'apport de chaleur et la température du milieu de transmission de la chaleur soient réduits de manière à éviter une surchauffe partielle de la substance d'une durée de plus de 1 heure à 130° C, ou d'une durée de plus d'une demi-heure à 150° C.

3. Substance minérale à base d'un produit minéral à trois couches, cristallin à grande surface, pouvant gonfler de manière réversible, dont les couches cristallines sont séparées les unes des autres, préparée par le procédé suivant les revendications 1 et 2, caractérisée en ce qu'elle est constituée de plus de 50% en poids de particules tabulaires d'une planéité uniforme, extrêmement minces, ayant une épaisseur de 0,5 à 10 microns et des dimensions de surface correspondant à un diamètre équivalent de 10 à 200 microns, et à un rapport épaisseur des particules : diamètre équivalent égal ou inférieur à 1 : 10, ces particules présentant des propriétés hydrophiles sur leur surface plane qui absorbent ou cèdent rapidement des liquides polaires comme de l'eau, ainsi que des forces intenses d'adhérence et de cohésion qui provoquent, lors du séchage des particules d'une dispersion dans un liquide polaire comme l'eau ou par humidification de la masse sèche, un retrait ne se produisant sensiblement que dans une direction et cela perpendiculairement au plan des tablettes, les particules se trouvant essentiellement côte à côte à plat et ayant une plasticité importante dans la gamme de teneurs en matières sèches de 35 à 65% en poids.

4. Substance minérale à base d'un produit minéral à trois couches cristallin à grande surface, pouvant gonfler de manière reversible, dont les couches cristallines sont séparées les unes des autres, préparée par le procédé suivant les revendications 1 et 2, caractérisée en ce qu'elle a un indice de plasticité

$$h_1 = 65{,}4393 - 1{,}32126\,W + 1{,}03456 \cdot 10^{-2}W^2 - 2{,}80579 \cdot 10^{-5}W^3$$

dans les limites de 60 à 140 W, $h_1$ étant exprimé en mm dans l'échelle de Bowmaker et W en g $H_2O$/100 g de substance sèche.

5. Substance minérale à base d'un produit minéral à trois couches cristallin à grande surface, pouvant gonfler de manière reversible, dont les couches cristallines sont séparées les unes des autres, préparée par le procédé suivant les revendications 1 et 2, caractérisée en ce qu'elle a une tension de cisaillement

$$\tau\,(\text{dyne/cm}^2) = 277{,}861 + 16{,}7424\,D - 1{,}39397 \cdot 10^{-1}\,D^2 + 4{,}15845\,D^3$$

représentant ses propriétés rhéologiques dans une dispersion aqueuse à une concentration de 20% en poids à 20° C mesurée dans un viscosimètre rotatif entre 0 et 140 D, D représentant la vitesse de cisaillement en seconde$^{-1}$.

6. Substance minérale suivant les revendications 3 à 5, caractérisée en ce qu'elle ne présente pas de crevasses de retrait lorsqu'elle est séchée à la surface d'une dispersion d'un liquide polaire tel que l'eau seule ou en mélange à d'autres substances, ou sur des surfaces lisses.

7. Substance minérale suivant les revendications 3 à 6, caractérisée en ce qu'elle forme une masse ayant un empilement de particules serrées et un faible volume de pores lorsqu'elle est séchée sous la forme d'une dispersion dans un liquide polaire comme l'eau, sous la forme d'un corps ou d'une

pellicule, ou lorsqu'elle est séchée sur des surfaces.

8. Substance minérale suivant les revendications 3 à 7, caractérisée en ce que les particules tabulaires représentent plus de 75% de la surface totale.

9. Substance minérale suivant les revendications 3 à 8, caractérisée en ce qu'elle est constituée pour la plus grande partie de particules tabulaires planes, de planéité uniforme, ayant une épaisseur de 0,5 à 5 microns.

10. Substance minérale suivant les revendications 3 à 9, caractérisée en ce qu'elle est constituée pour la plus grande partie de particules tabulaires ayant un rapport épaisseur des particules : diamètre équivalent égal ou inférieur à 1 : 20.

11. Substance minérale suivant les revendications 3 à 10, caractérisée en ce qu'elle présente, lorsqu'elle est séchée dans une dispersion d'un liquide polaire comme l'eau, ou lorsqu'elle est séchée sur des surfaces, un retrait des particules tabulaires pour ce qui concerne les dimensions de surface, de 0,5 à 1,5% (longueur et largeur) et d'épaisseur d'environ 25 à 35%.

12. L'utilisation de la substance minérale suivant les revendications 3 à 11 comme agent de séparation pour d'autres substances, ou comme agent anti-agglomérant pour des substances hygroscopiques, ou comme agent anti-poussières pour des substances dont une partie a une granulométrie fine, ou s'use par abrasion, ou comme support pour des substances très actives, ou pour des produits phytosanitaires, ou pour des agents de lutte contre les parsites, ou comme agent lubrifiant pour améliorer l'aptitude au glissement d'autres substances, ou comme agent d'enrobage pour des substances hydrosolubles, en vue de ralentir leur vitesse de solubilité, ou en vue de ralentir la vitesse de solubilité d'engrais solubles dans l'eau.

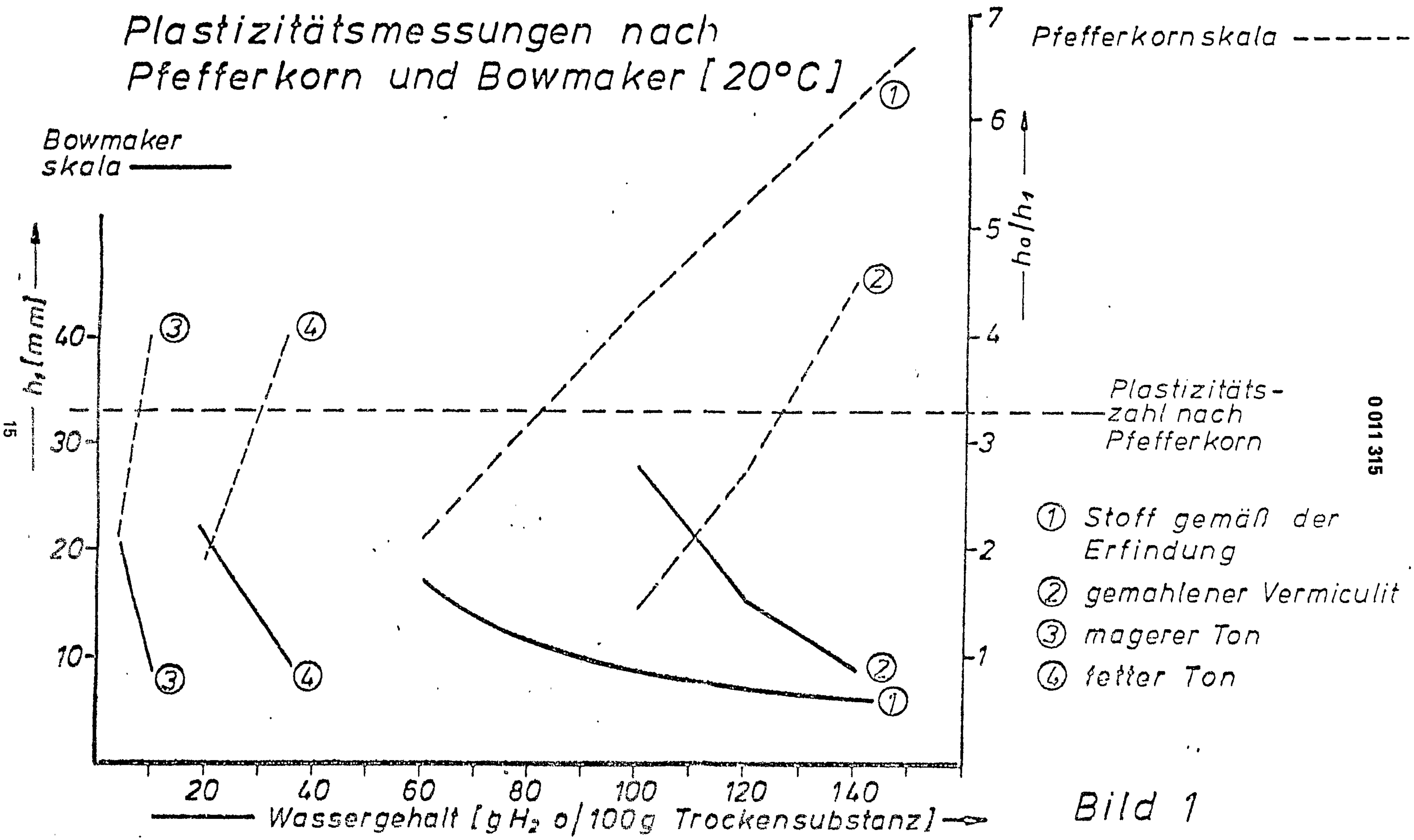
Plastizitätsmessungen nach
Pfefferkorn und Bowmaker [20°C]
Bowmaker
skala
Pfefferkornskala
$h_1$ [mm]
$h_0/h_1$
10
20
30
40
1
2
3
4
5
6
7
Plastizitäts-
zahl nach
Pfefferkorn
①
②
③
④
① Stoff gemäß der Erfindung
② gemahlener Vermiculit
③ magerer Ton
④ fetter Ton
20
40
60
80
100
120
140
Wassergehalt [g $H_2$ o/100g Trockensubstanz]

Bild 1

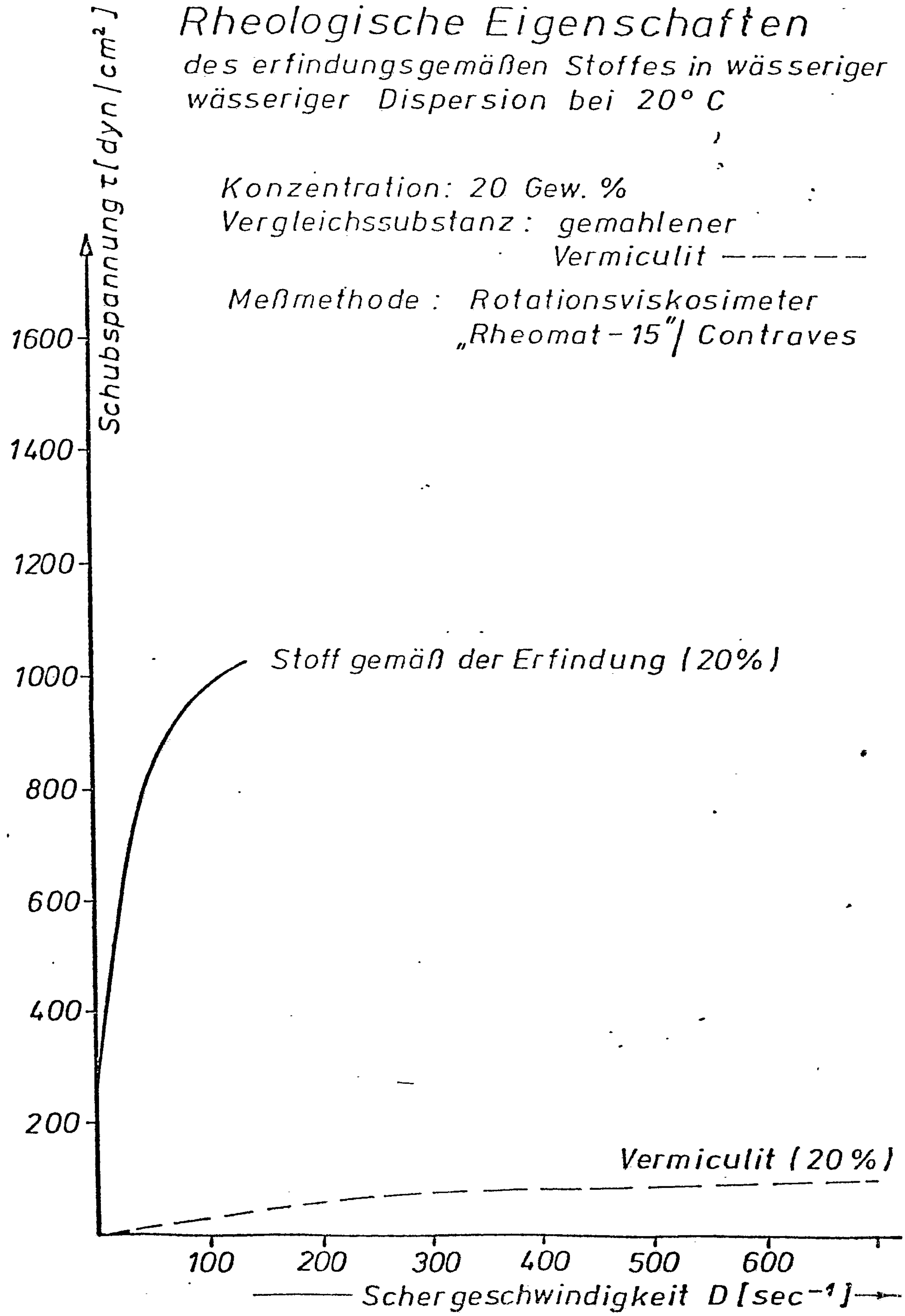
Rheologische Eigenschaften
des erfindungsgemäßen Stoffes in wässeriger
wässeriger Dispersion bei 20° C
Konzentration: 20 Gew. %
Vergleichssubstanz: gemahlener Vermiculit ------
Meßmethode: Rotationsviskosimeter „Rheomat-15"/ Contraves
Schubspannung τ [dyn/cm²]
1600
1400
1200
1000
800
600
400
200
Stoff gemäß der Erfindung (20%)
Vermiculit (20%)
100
200
300
400
500
600
Schergeschwindigkeit D [sec⁻¹]

Bild 2